# EUROPÄISCHE PATENTSCHRIFT

(11) **EP 0 597 264 B1**
(45) Veröffentlichungstag und Bekanntmachung des Hinweises auf die Patenterteilung: **06.03.1996**
(21) Anmeldenummer: 93116473.5
(22) Anmeldetag: 12.10.1993
(51) Int. Cl.: B08B 15/04, A61C 19/00

(54) **Vorrichtung zum Absaugen von insbesondere staubhaltigen Gasen**
Device for drawing off, in particular dust-containing gases
Dispositif pour aspirer des gaz en particulier chargés des poussières

(30) Priorität: 14.10.1992 DE 4234538
(43) Veröffentlichungstag der Anmeldung: 18.05.1994
(73) Patentinhaber: BEGO Bremer Goldschlägerei Wilh. Herbst GmbH & Co., D-28329 Bremen (DE)
(72) Erfinder: Gundlach, Hans-Werner, Dr.-Ing., D-28209 Bremen (DE); Jacob, Friedrich, D-28865 Lilienthal (DE)
(74) Vertreter: Möller, Friedrich, Dipl.-Ing.

(56) Entgegenhaltungen:
- DE-A- 1 250 093
- DE-A- 2 261 297
- DE-C- 203 017
- GB-A- 1 593 279
- GB-A- 2 119 503

## Beschreibung

Die Erfindung betrifft eine Vorrichtung zum Absaugen von insbesondere staubhaltigen Gasen gemäß dem Oberbegriff des Anspruchs 1.

Eine solche Vorrichtung ist aus der DE-C-203 017 bekannt. An einen Saugkopf ist ein Strahlapparat angesetzt, durch den ein Unterdruck im Saugkopf erzeugt wird. Als Unterdruckerzeuger dient eine Druckluftdüse. Diese ist außerhalb eines Ringkanals des Saugkopfes angeordnet und arbeitet nach dem Prinzip einer Wasserstrahlpumpe. Hierdurch ergibt sich nur ein ungleichmäßiger Unterdruck im Saugkopf. Insbesondere in einem dem Strahlapparat diametral gegenüberliegenden Bereich des Ringkanals ist nur ein äußerst unzureichender Unterdruck gegeben.

Weiterhin ist aus der GB-A-1 593 279 eine Vorrichtung bekannt, bei der im Bereich vorgegebener Öffnungen an der Innenseite eines Saugkopfes mittels einer Druckluftströmung ein Unterdruck erzeugt wird. Die Druckluftströmung strömt dabei geradlinig in Axialrichtung einer äußeren Mantelfläche des Saugkopfes.

Ausgehend von dem eingangs genannten Stand der Technik liegt der Erfindung die Aufgabe zugrunde, eine einfach aufgebaute Vorrichtung zu schaffen, bei der im Saugkopf ein über seinen Umfang gleichmäßiger, ausreichender Unterdruck zum Absaugen insbesondere staubhaltiger Gase erzielt wird.

Diese Aufgabe wird durch eine Vorrichtung mit den Merkmalen des Anspruchs 1 gelöst. Nach der Erfindung wird die Druckluft in den Ringkanal eingeblasen. Hierdurch wird in dem Ringkanal eine kreisbogenförmig umlaufende Druckluftströmung erzeugt. Dies erfolgt durch eine Druckluftdüse, die derart ausgerichtet ist, daß die aus der Druckluftdüse austretende Druckluft etwa in Längsrichtung einer Außenwand des Ringkanals in denselben einströmt. Durch die kreisbogenförmig umlaufende Druckluftströmung wird diese infolge Zentrifugalkraft gegen die Außenwand des Ringkanals gedrückt. Hierdurch entsteht ein Unterdruck im Bereich einer Innenwand des Ringkanals, der zum Absaugen der insbesondere staubhaltigen Gase genutzt wird. Hierdurch ist ein ausreichender Unterdruck im Bereich der gesamten Länge der Innenwand bzw. über die gesamte innere Ringfläche des Ringkanals gewährleistet.

Dadurch, daß sich der Ringkanal in Längsrichtung der Druckluftströmung vergrößert, läßt sich ein konstanter Unterdruck im Bereich der gesamten inneren Ringfläche des Ringkanals erzeugen.

Vorzugsweise ist ein Austrittsstutzen im Bereich des größten Querschnitts des Ringkanals und eine Druckluftdüse im Bereich kleinsten Querschnitts des Ringkanals angeordnet.

Der Ringkanal weist mindestens eine umlaufende Eintrittsöffnung oder mindestens eine umlaufende Reihe aus einer Vielzahl einzelner Eintrittsöffnungen auf. Diese ist vorzugsweise als ein an einer inneren Ringfläche des Ringkanals angeordneter Schlitz ausgebildet. Durch diesen treten die angesaugten Gase in den Ringkanal ein. Die Abmessungen des Ringkanals bzw. des (ringförmigen) Schlitzes sind auf den Druck des durch die Druckluftdüse eingebrachten Luftstrahls abgestimmt, so daß eine optimale Zufuhr der staubhaltigen Gase gewährleistet ist.

Vorzugsweise ist der Saugkopf bzw. der Ringkanal derart auf dem Rand eines Behälters, in dem die staubhaltigen Gase nach Anmischen fester Stoffe freigesetzt werden, positioniert, daß die im Behälter aufsteigenden Gase ohne Behinderung durch den (ringförmigen) Schlitz des Ringkanals hindurchtreten können. Hierzu ist der Verlauf der inneren Ringfläche des Ringkanals an den Verlauf des Behälterrandes angepaßt; und zwar derart, daß die Abmessung der durch den Ringkanal gebildeten Öffnung mit derjenigen der Behälteröffnung übereinstimmt.

Nach einer vorteilhaften Ausgestaltung der Erfindung enthält der Saugkopf bzw. der Ringkanal einen Austrittsstutzen mit einer weiteren Druckluftdüse, die die Absaugwirkung der Vorrichtung verstärkt.

Weitere Einzelheiten der Erfindung betreffen die konstruktive Ausbildung der Vorrichtung. Nachfolgend wird ein Ausführungsbeispiel der erfindungsgemäßen Vorrichtung anhand der Zeichnung näher erläutert. Es zeigt:

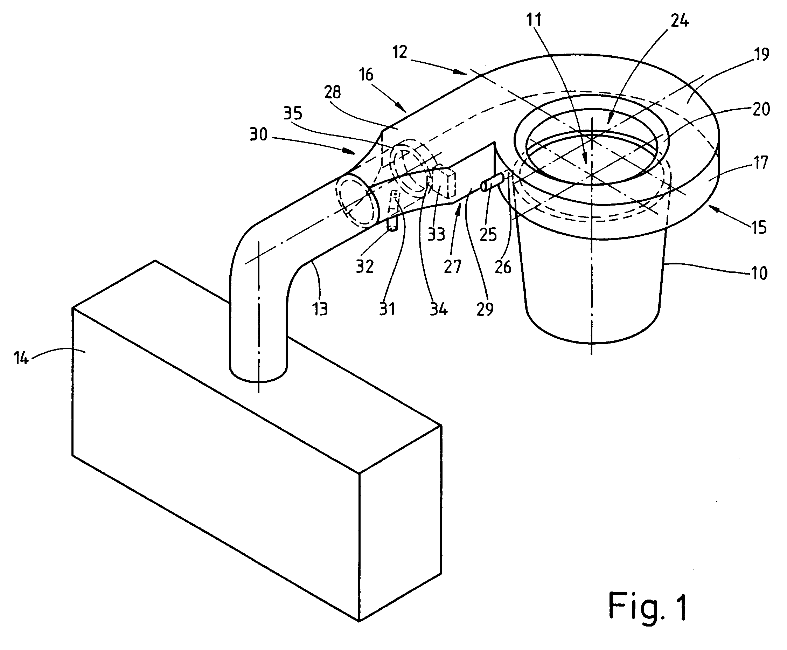

- Fig. 1: eine perspektivische Darstellung einer Vorrichtung zum Absaugen von Gasen,
- Fig. 2: einen Horizontalschnitt durch einen Ringkanal, und
- Fig. 3: einen Querschnitt durch den auf einem Behälter aufgesetzten Ringkanal gemäß den Schnittlinien III-III in Fig. 2.

Die Vorrichtung des gezeigten Ausführungsbeispiels dient zur Absaugung von gesundheitsgefährdender Luft, die im Bereich der Dentaltechnik bei der Verarbeitung von Einbettmassen freigesetzt wird. Grundsätzlich kann die Vorrichtung in anderen Bereichen eingesetzt werden.

Die Einbettmassen werden in einem Behälter 10 angemischt, wobei die staubhaltige Luft durch eine Öffnung 11 des Behälters 10 entweicht. Zur Absaugung der staubhaltigen Luft wird der Saugkopf 12 auf den oberen Rand des Behälters 10 aufgesetzt. Der Behälter 10 kann somit mit den Komponenten für die Einbettmasse beschickt werden sowie anschließend die Komponenten verrührt werden, während die staubhaltige Luft abgesaugt wird. Die Vorrichtung verfügt über einen Saugkopf 12, der mit einer Abfuhrleitung 13 verbunden ist, die die durch den Saugkopf 12 angesaugte staubhaltige Luft weiterleitet und einem Filter 14 zuführt. Dieser Filter 14 dient zur Abscheidung der in der Luft enthaltenen Staubpartikel. Anstelle des Filters 14 können auch andere Staubabscheider Verwendung finden.

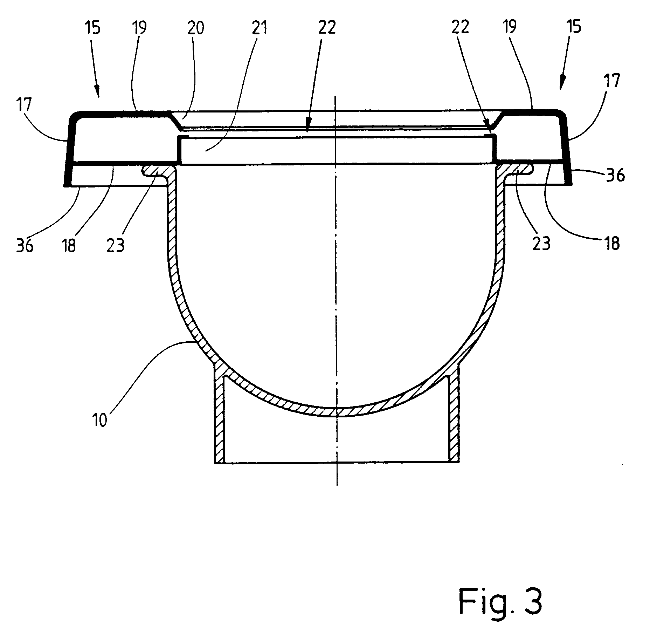

Der Saugkopf 12 besteht aus einem die staubhaltigen Gase aufnehmenden Ringkanal 15 und einem die Gase ableitenden Austrittsstutzen 16. Wie besonders gut aus Fig. 3 zu ersehen, weist der Ringkanal 15 eine aufrechte Außenwandung 17, eine horizontal verlaufende Bodenwandung 18 sowie Deckwandung 19 und eine schräg verlaufende, obere Innenwandung 20 und eine vertikal verlaufende untere Innenwandung 21 auf. Die obere Innenwandung 20 schließt sich unter einem stumpfen Winkel an die Deckwandung 19 an. Alternativ kann die obere Innenwandung 20 auch senkrecht zur Deckwandung 19 angeordnet sein. Zwischen der oberen Innenwandung 20 und der unteren Innenwandung 21 ist ein Zwischenraum ausgebildet, der sich als umlaufender ringförmiger Schlitz 22 an der Innenseite des Ringkanals 15 erstreckt. Alternativ ist es aber auch möglich, eine Reihe aus einer Vielzahl einzelner Bohrungen vorzusehen.

In einer weiteren Ausführungsform kann der Ringkanal 15 innenseitig ausschließlich aus einer oberen Innenwandung 20 oder einer unteren Innenwandung 21 gebildet sein. Das Vorhandensein der unteren Innenwandung 21 ist für das Funktionieren der Vorrichtung nicht zwingend erforderlich.

Im vorliegenden Beispiel weist der Saugkopf 12 eine kreisförmige Öffnung 24 auf, die den Abmessungen der randseitigen Öffnung 11 des Behälters 10 etwa entspricht. Der Ringkanal 15 wird mit seiner Bodenwandung 18 auf Halteschenkel 23 am Rand des Behälters 10 aufgesetzt. In Verlängerung der Außenwandung 17 ist ein umlaufender Kragen 36 vorgesehen, der das Herunterrutschen des Saugkopfes 12 vom Behälter 10 verhindert. An der Stelle des Kragens können auch separate Befestigungsmittel verwendet werden.

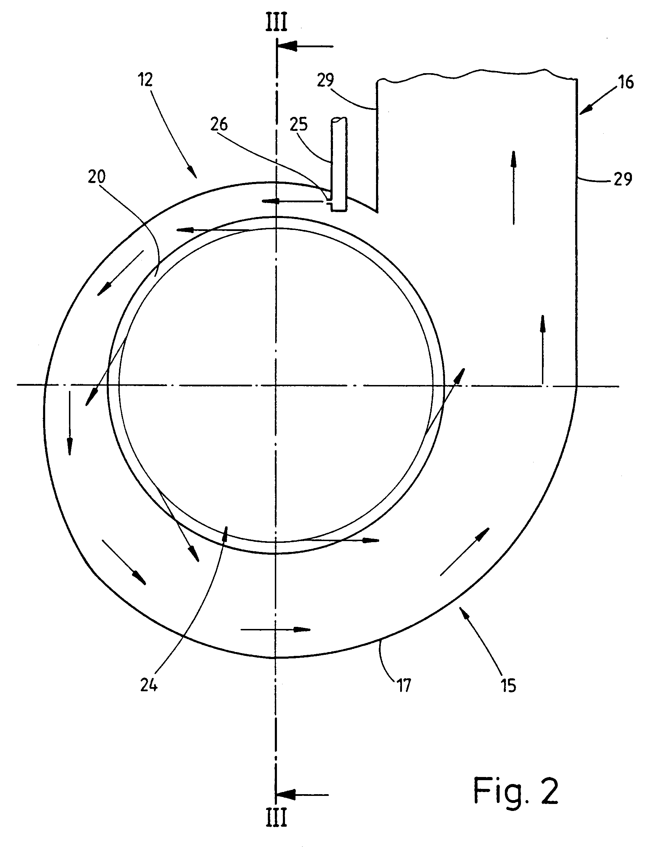

Wie besonders gut in Fig. 2 zu sehen ist, befindet sich in einer Bohrung in der Außenwandung 17 des Ringkanals 15 ein Rohr 25, an dessen freien, in das Innere des Ringkanals 15 zeigende Ende eine Druckluftdüse 26 angebracht ist. Diese ist derart ausgerichtet, daß die aus der Druckluftdüse 26 austretende Druckluft etwa tangential, d. h. in Längsrichtung der Außenwandung 17, in den Ringkanal eingeblasen wird. Das andere, außerhalb des Ringkanals 15 angeordnete Ende des Rohres 25 ist über einen nicht gezeigten Druckluftschlauch mit einer ebenfalls nicht gezeigten Druckluftquelle verbunden.

Die Absaugung der innerhalb und außerhalb des Behälters 10 befindlichen staubhaltigen Gase erfolgt ähnlich dem Injektorprinzip. Die durch die Druckluftdüse 26 eingebrachte Druckluft wird durch den Ringkanal 15 geleitet. In dem Ringkanal entsteht dadurch eine kreisbogenförmig umlaufende Druckluftströmung. Infolge der dabei auf die Druckluft wirkenden Zentripetalbeschleunigung stellt sich innerhalb des Ringkanals 15, nämlich in der Nähe des ringförmigen Schlitzes 22, ein Unterdruck ein. Dieser bewirkt, daß im Randbereich des Behälters 10 befindliche Gase angesaugt werden und durch den ringförmigen Schlitz 22 in den Ringkanal 15 eintreten. Der Druck des durch die Druckluftdüse 26 eingebrachten Druckluftstrahls ist derart gewählt, daß die Ansaugung der staubhaltigen Gase über die gesamte Länge des Ringkanals 15 erfolgt.

Bei dem vorliegenden Ausführungsbeispiel verbreitert sich der Ringkanal 15 schneckenförmig in Strömungsrichtung ausgehend von einem Bereich, in dem die Druckluftdüse 26 angeordnet ist. Zu diesem Zweck ist die Außenwandung 17 des Ringkanals 15 kreisbogenförmig ausgebildet, wobei sie sich in Strömungsrichtung vom Rand des Behälters 10 entfernt. Durch die Querschnittszunahme in Strömungsrichtung verfügt der Ringkanal 15 über einen ausreichenden Rauminhalt, um das Volumen der entlang des ringförmigen Schlitzes 22 angesaugten Luft aufzunehmen.

Nachdem der Druckluftstrahl und die angesaugte staubhaltige Luft innerhalb des Ringkanals 15 etwa eine Umdrehung um den Rand des Behälters 10 ausgeführt hat, wird sie geradlinig durch den Austrittsstutzen 16 vom Behälter 10 weggeleitet. Dazu schließt sich der Austrittsstutzen 16 mit einer ebenen Bodenwandung 27, Deckwandung 28 und parallel zueinander angeordneten vertikalen Seitenwandungen 29 an. Im weiteren Verlauf des Austrittsstutzens 16 verjüngt sich dieser in Form eines rohrförmigen Ansatzes 30, bis der Querschnitt des rohrförmigen Ansatzes 30 mit dem Querschnitt der sich anschließenden Abfuhrleitung 13 übereinstimmt.

Um den Saugeffekt zu erhöhen, ist innerhalb des Austrittsstutzens 16, nämlich innerhalb des rohrförmigen Ansatzes 30, eine weitere als Treibdüse dienende Druckluftdüse 31 angeordnet. Die Austrittsöffnung dieser Druckluftdüse 31 ist derart gerichtet, daß die durch sie eingebrachte Druckluft in Strömungsrichtung der Luft austritt. Der sich dadurch in Längsrichtung des Austrittsstutzens 16 bzw. der Abfuhrleitung 13 erstreckende Druckluftstrahl wirkt dabei ähnlich einer Dampfstrahlpumpe, wobei der rohrförmige Ansatz 30 als Fangdüse dient. Dadurch wird die Absaugwirkung des Saugkopfes 12 erhöht und die Luft dem Filter 14 mit erhöhtem Druck zugeführt.

Die Druckluftdüse 31 ist in gleicher Weise wie die Druckluftdüse 26 mit einer gemeinsamen Druckluftquelle verbunden. Ein Rohr 32 der Druckluftdüse 31 erstreckt sich durch eine Bohrung an der Deckwandung 28 des Austrittsstutzens 16. Das außenseitige Ende des Rohres 32 ist durch eine nicht gezeigte Schlauchverbindung mit der Druckluftquelle verbunden.

Der Saugkopf 12 ist gegenüber der Abfuhrleitung 13 schwenkbar gelagert. Hierdurch wird ein Hochklappen des Saugkopfes 12 ermöglicht, so daß ein freier Zugang zum Behälter 10 gewährleistet ist. Ein innerhalb des Austrittsstutzens 16 angebrachter Endschalter 33 sorgt dafür, daß mit dem Verschwenken des Saugkopfes 12 die Zufuhr von Druckluft durch die Druckluftdüsen 26 und 31 unterbrochen bzw. beendet wird. Ein Steg 34 des Endschalters 33 steht während des Betriebs in Kontakt mit einem ringförmigen Einsatz 35 des Austrittsstutzens 16. Der ringförmige Einsatz 35 ist axial zum sich anschließenden Bereich der Abfuhrleitung 13 angeordnet. Durch das Verschwenken des Saugkopfes 12 wird der ringförmige Einsatz 35 mitbewegt, wobei der Kontakt zum Steg 34 des feststehenden Endschalters 33 unterbrochen wird und somit das Abschalten der Absaugung bewirkt. Anstelle des elektrischen Kontaktes ist auch ein mechanischer Schalter denkbar, wobei ein federvorgespannter Steg 34 von dem Einsatz 35 während des Betriebs des Saugkopfes 12 niedergedrückt wird.

## Patentansprüche

1. Vorrichtung zum Absaugen von insbesondere staubhaltigen Gasen bzw. staubhaltiger Luft mit mindestens einem Saugkopf (12), der wenigstens eine Eintrittsöffnung, einen Austrittsstutzen (16) und einen als Druckluftdüse (26) ausgebildeten Sauglufterzeuger aufweist, wobei der Saugkopf (12) als Ringkanal (15) ausgebildet ist, **dadurch gekennzeichnet,** daß die Druckluftdüse (26) derart ausgerichtet ist, daß die aus der Druckluftdüse (26) austretende Druckluft zur Erzeugung einer kreisbogenförmig umlaufenden Druckluftströmung im Ringkanal (15) etwa in Längsrichtung einer Außenwand (17) des Ringkanals (15) in denselben einströmt, und daß sich der Querschnitt des Ringkanals (15) in Strömungsrichtung der durch die Druckluftdüse (26) erzeugten umlaufenden Druckluftströmung kontinuierlich vergrößert.

2. Vorrichtung nach Anspruch 1, dadurch gekennzeichnet, daß der Austrittsstutzen (16) an einer Stelle etwa größten Querschnitts des Ringkanals (15) angeordnet ist.

3. Vorrichtung nach Anspruch 1 oder 2, dadurch gekennzeichnet, daß die Druckluftdüse (26) an einer Stelle etwa geringsten Querschnitts im Ringkanal (15) einmündet.

4. Vorrichtung nach einem der Ansprüche 1 bis 3, dadurch gekennzeichnet, daß der Ringkanal (15) mindestens eine umlaufende Eittrittsöffnung oder mindestens eine umlaufende Reihe aus einer Vielzahl einzelner Eintrittsöffnungen aufweist.

5. Vorrichtung nach Anspruch 4, dadurch gekennzeichnet, daß die Eintrittsöffnung oder die Eintrittsöffnungen an der inneren Ringfläche des Ringkanals (15) gebildet sind, insbesondere durch einen umlaufenden, ringförmigen Schlitz (22).

6. Vorrichtung nach einem der Ansprüche 1 bis 5, dadurch gekennzeichnet, daß dem Saugkopf (12) bzw. dem Ringkanal (15) eine weitere Druckluftdüse (31) zugeordnet ist, insbesondere im Bereich des Austrittsstutzens (16).

7. Vorrichtung nach einem der Ansprüche 1 bis 6 dadurch gekennzeichnet, daß der Ringkanal (15) mit seinem Austrittsstutzen (16) schwenkbar an einer Abfuhrleitung (13) angeordnet ist.

8. Vorrichtung nach Anspruch 7, dadurch gekennzeichnet, daß im Bereich des Austrittsstutzens (16) ein Endschalter angeordnet ist zum Abschalten der zugeführten Druckluft beim Verschwenken des Saugkopfes (12).

## Claims

1. Device for drawing off in particular dust-containing gases or dust-containing air, with at least one suction head (12) which has at least one inlet orifice, an outlet connection piece (16) and a suction-air generator designed as a compressed-air nozzle (26), the suction head (12) being designed as an annular duct (15), characterized in that the compressed-air nozzle (26) is oriented in such a way that the compressed air emerging from the compressed-air nozzle (26) flows approximately in the longitudinal direction of an outer wall (17) of the annular duct (15) into the latter in order to generate a compressed-air flow rotating in the form of an arc of a circle, and in that the cross-section of the annular duct (15) increases continuously in the direction of flow of the rotating compressed-air flow generated by the compressed-air nozzle (26).

2. Device according to Claim 1, characterized in that the outlet connection piece (16) is arranged at a location of approximately maximum cross-section of the annular duct (15).

3. Device according to Claim 1 or 2, characterized in that the compressed-air nozzle (26) opens into the annular duct (15) at a location of approximately minimum cross-section.

4. Device according to one of Claims 1 to 3, characterized in that the annular duct (15) has at least one peripheral inlet orifice or at least one peripheral row of a multiplicity of individual inlet orifices.

5. Device according to Claim 4, characterized in that the inlet orifice or inlet orifices are formed on the inner annular surface of the annular duct (15), in particular by a peripheral, annular slit (22).

6. Device according to one of Claims 1 to 5, characterized in that the suction head (12) or the annular duct (15) is assigned a further compressed-air nozzle (31), in particular in the region of the outlet connection piece (16).

7. Device according to one of Claims 1 to 6, characterized in that the annular duct (15) is arranged with its outlet connection piece (16) pivotably on a discharge conduit (13).

8. Device according to Claim 7, characterized in that a limit switch is arranged in the region of the outlet connection piece (16) for the purpose of switching off the supplied compressed air during the pivoting of the suction head (12).

## Revendications

1. Dispositif d'aspiration de gaz contenant en particulier de la poussière ou de l'air poussiéreux, avec au moins une tête aspirante (12) qui présente au moins une ouverture d'entrée, une tubulure de sortie (16) et un générateur d'air d'aspiration réalisé sous forme de buse d'air comprimé (26), la tête d'aspiration (12) étant réalisée sous forme de canal annulaire (15), caractérisé en ce que la buse d'air comprimé (26) est orientée de manière à ce que l'air comprimé, sortant de la buse à air comprimé (26) pour produire un écoulement d'air comprimé circulant en arc dans le canal annulaire (15), s'introduise dans ce dernier à peu près dans la direction longitudinale d'une paroi extérieure (17) de celui-ci (15), et que la section transversale du canal annulaire (15), dans la direction de l'écoulement de l'air comprimé effectuant un mouvement produit par la buse d'air comprimé (26), va en augmentant de façon continue.

2. Dispositif selon la revendication 1, caractérisé en ce que la tubulure de sortie (16) est disposée en un endroit où la section transversale du canal annulaire (15) est pratiquement maximale.

3. Dispositif selon la revendication 1 ou 2, caractérisé en ce que la buse à air comprimé (26) débouche en un endroit où la section transversale dans le canal annulaire (15) est à peu près minimale.

4. Dispositif selon l'une des revendications 1 à 3, caractérisé en ce que le canal annulaire (15) présente une ouverture d'entrée en pourtour, ou bien au moins une rangée en pourtour constituée d'une pluralité d'ouvertures d'entrée individuelles.

5. Dispositif selon la revendication 4, caractérisé en ce que l'ouverture d'entrée ou les ouvertures d'entrée sont constituées sur la surface annulaire intérieure du canal annulaire (15), en particulier par une fente (22) annulaire constituant un pourtour.

6. Dispositif selon l'une des revendications 1 à 5, caractérisé en ce qu'une buse d'air comprimé (31) supplémentaire est associée à la tête aspirante (12) ou au canal annulaire (15), en particulier dans la zone de la tubulure de sortie (16).

7. Dispositif selon l'une des revendications 1 à 6, caractérisé en ce que le canal annulaire (15) est disposé avec sa tubulure de sortie (16) de façon à pouvoir pivoter sur une conduite d'évacuation (13).

8. Dispositif selon la revendication 7, caractérisé en ce qu'un interrupteur de fin de course, destiné à mettre hors service l'air comprimé amené, ceci lors du pivotement de la tête aspirante (12), est disposé dans la zone de la tubulure de sortie (16).
